# EUROPÄISCHE PATENTANMELDUNG

(11) **EP 4 349 600 A1**
(43) Veröffentlichungstag der Anmeldung: **10.04.2024**
(21) Anmeldenummer: 22200263.6
(22) Anmeldetag: 07.10.2022
(51) Int. Cl.: B33Y 10/00, B33Y 30/00, B33Y 50/02, B23K 26/064, B23K 35/02, B23K 15/02, B22F 10/22, B23K 26/067, B23K 15/00, B23K 26/342, B23K 37/02, B23K 26/08

(54) **VERFAHREN ZUM BETREIBEN EINER DRAHTBASIERTEN MATERIALAUFTRAGUNGSVORRICHTUNG UND DRAHTBASIERTE MATERIALAUFTRAGUNGSVORRICHTUNG**

(71) Anmelder: Helmholtz-Zentrum hereon GmbH, 21502 Geesthacht (DE)
(72) Erfinder: ODERMATT, Anton Emil, 21029 Hamburg (DE)
(74) Vertreter: Seemann & Partner Patentanwälte mbB

(57) **Zusammenfassung**

Die Erfindung betrifft u.a. eine drahtbasierte Materialauftragungsvorrichtung (10, 100) mit einer Drahtfördervorrichtung (20) zum Fördern eines eine Drahtspitze (31) aufweisenden Drahts (30) in Richtung einer Substratoberfläche (62) eines Substrats (60) mit einer Fördergeschwindigkeit, wobei die Drahtspitze (31) mit einer Anpresskraft auf die Substratoberfläche (62) gedrückt wird oder ist, mit einer Strahlungsquelle (50, 70) zum Schmelzen des Materials der an der Substratoberfläche (62) angeordneten Drahtspitze (31) des Drahts (30) wobei ein Antriebskenngrößensensor (42, 44) zum Erfassen wenigstens einer Antriebskenngröße der Drahtfördervorrichtung (20) und eine mit dem Antriebskenngrößensensor (42, 44) verbundene Regelvorrichtung (40) vorgesehen sind, wobei die Regelvorrichtung (40) eingerichtet ist, die Fördergeschwindigkeit des Drahts (30) in Abhängigkeit der wenigstens einen Antriebskenngröße der Drahtfördervorrichtung (20) zu regeln.

## Beschreibung

Die Erfindung betrifft ein Verfahren zum Betreiben einer drahtbasierten Materialauftragungsvorrichtung, insbesondere einer Strahlungsschweißvorrichtung, sowie eine drahtbasierte Materialauftragungsvorrichtung, insbesondere eine Strahlungsschweißvorrichtung.

Es ist bekannt, dass beim Laserauftragschweißen durch Aufschmelzung und Aufbringen eines Materials z.B. eines Schweißdrahts auf einem Werkstück ein Oberflächenauftrag erfolgt. Für das Laserauftragschweißen (Laser Metal Deposition (LMD)) wird bei diesem additiven Auftragsverfahren beispielsweise Material eines Drahts bzw. Schweißdrahts auf ein Substrat aufgetragen. Durch den Laser als Strahlungsquelle oder Wärmequelle wird das Material des Drahts aufgeschmolzen, so dass zwischen dem Substrat und dem aufgeschmolzenen Material des Drahts eine metallurgische Verbindung entsteht.

Beim Laserauftragschweißen mit Draht (Wire-based Laser Metal Deposition) wird ein Draht lokal mit dem Laserstrahl einer Vorrichtung aufgeschmolzen und schichtweise gezielt auf die Substratoberfläche aufgebracht.

Eine Aufgabe der Erfindung besteht darin, bei einer Materialauftragungsvorrichtung, insbesondere beim drahtbasierten Laserstrahlauftragsschweißen, die Prozesssicherheit bzw. die Prozessstabilisierung auf einfache Weise zu gewährleisten.

Gelöst wird diese Aufgabe durch ein Verfahren zum Betreiben einer drahtbasierten Materialauftragungsvorrichtung, insbesondere einer Strahlungsschweißvorrichtung, wobei ein eine Drahtspitze aufweisender Draht, insbesondere Schweißdraht, mittels einer Drahtfördervorrichtung in Richtung einer Substratoberfläche eines Substrats, insbesondere Bauteils, mit einer Fördergeschwindigkeit gefördert wird und die Drahtspitze mit einer Anpresskraft auf die Substratoberfläche gedrückt wird, wobei die an der Substratoberfläche angeordnete Drahtspitze mittels einer Strahlungsquelle geschmolzen wird, so dass das aufgeschmolzene Material der Drahtspitze auf die Substratoberfläche aufgebracht, insbesondere aufgeschweißt, wird,
wobei mittels eines Antriebskenngrößensensors wenigstens eine Antriebskenngröße der Drahtfördervorrichtung erfasst wird, wobei die wenigstens eine erfasste Antriebskenngröße der Drahtfördervorrichtung an eine Regelvorrichtung übermittelt wird und wobei mittels der Regelvorrichtung die Fördergeschwindigkeit des Drahts in Abhängigkeit der wenigstens einen Antriebskenngröße der Drahtfördervorrichtung geregelt wird, so dass insbesondere die Anpresskraft, mit der die Drahtspitze des Drahts auf die Substratoberfläche gedrückt wird, konstant gehalten wird oder ist,
und/oder wobei mittels eines Bewegungskenngrößensensors wenigstens eine durch den geförderten Draht bewirkte Bewegungskenngröße der Drahtfördervorrichtung erfasst wird wobei die wenigstens eine erfasste Bewegungskenngröße der Drahtfördervorrichtung an eine oder die Regelvorrichtung übermittelt wird und wobei mittels der Regelvorrichtung die Fördergeschwindigkeit des Drahts in Abhängigkeit der wenigstens einen Bewegungskenngröße der Drahtfördervorrichtung geregelt wird, so dass insbesondere die Anpresskraft, mit der die Drahtspitze des Drahts auf die Substratoberfläche gedrückt wird, konstant gehalten wird oder ist.

Die Erfindung beruht auf den Gedanken, dass durch die Regelung der Fördergeschwindigkeit des Drahts die Anpresskraft zwischen der Drahtspitze und dem Grund der Schmelze auf der Substratoberfläche im Wesentlichen konstant gehalten wird. Dadurch wird gewährleistet, dass die jeweilige erforderliche Menge an Material des Drahts in Richtung der Substratoberfläche des Substrats gefördert wird, so dass das Material der Drahtspitze komplett geschmolzen wird und der Energieeintrag in das Substrat minimiert wird oder ist.

Gemäß der Erfindung wird wenigstens eine Antriebskenngröße der Drahtfördervorrichtung erfasst, wobei anschließend mittels der Regelvorrichtung die Fördergeschwindigkeit des Drahts in Abhängigkeit der wenigstens einen, insbesondere zeitlich veränderbaren oder sich verändernden, Antriebskenngröße der Drahtfördervorrichtung geregelt wird. Hierbei werden insbesondere direkte Antriebskenngrößen der Drahtfördervorrichtung, wie zum Beispiel bei einem elektrischen Antrieb für den Draht die Stromstärke, mittels der der elektrische Antrieb beaufschlagt wird, oder das Drehmoment im Antriebsstrang des elektrischen Antriebs zwischen dem elektrischen Antrieb und den Antriebsrollen, mittels denen der Draht gefördert wird, erfasst. Hierbei weist die Drahtfördervorrichtung neben dem elektrischen Antrieb auch wenigstens eine, insbesondere zwei oder drei oder vier oder mehr, Antriebsrollen auf, um den Draht mit einer vorbestimmten Geschwindigkeit zu fördern.

Gemäß einem alternativen oder zusätzlichen Aspekt gemäß der Erfindung wird mittels eines Bewegungskenngrößensensors wenigstens eine, insbesondere zeitlich veränderbare oder sich verändernde, Bewegungskenngröße der Drahtfördervorrichtung erfasst, in Abhängigkeit der die Fördergeschwindigkeit des Drahts geregelt wird. Beispielsweise weist die Drahtfördervorrichtung eine Drahtführungsvorrichtung auf, die bei Förderung des Drahts mechanisch aufgrund der Förderung des Drahts und des Anpressens der Drahtspitze auf die Substratoberfläche ausgelenkt wird, wobei in einer Ausgestaltung die Auslenkung oder die Kraft aufgrund des Anpressdrucks der Drahtspitze auf die Substratoberfläche gemessen wird. In einer anderen Ausgestaltung ist es im Rahmen der Erfindung möglich, dass die ein Gestell aufweisende Drahtfördervorrichtung infolge des geförderten Drahts bewegt wird, so dass die Auslenkung der Drahtfördervorrichtung oder die auf die Drahtfördervorrichtung wirkende Kraft aufgrund des Anpressens der Drahtspitze auf den Draht erfasst wird.

Vorzugsweise wird die Regelvorrichtung derart betrieben, dass bei einer Abweichung der Antriebskenngröße oder der Bewegungskenngröße der Fördervorrichtung von einer Soll-Antriebskenngröße oder von einer Soll-Bewegungskenngröße die Fördergeschwindigkeit des Drahts erhöht oder verringert wird.

Gemäß der Erfindung wird mittels des Antriebskenngrößensensors oder mittels des Bewegungskenngrößensensors eine Messgröße erfasst, welche mit der Kraft, die durch den Draht, insbesondere Schweißdraht, auf das Substrat ausgeübt wird, korreliert. Die dabei erfassten Antriebskenngrößen und/oder Bewegungskenngrößen der Drahtfördervorrichtung werden verwendet, um die Fördergeschwindigkeit des Drahts so zu beeinflussen, dass die Anpresskraft des Drahts auf das Substrat im Wesentlichen konstant gehalten wird. Dadurch wird bei einem Betrieb der Materialauftragungsvorrichtung verhindert, dass die Schmelze oder das aufgeschmolzene Material der Drahtspitze überhitzt und/oder unterkühlt, wodurch erreicht wird, dass die Materialauftragsrate auf eine lokal benötigte Materialmenge, vorzugsweise automatisiert, angepasst wird oder ist.

Bei einer Ausgestaltung der Materialauftragungsvorrichtung, insbesondere einer Strahlungsschweißvorrichtung, wie zum Beispiel einer Laserauftragschweißvorrichtung oder einer Elektronenstrahlschweißvorrichtung, wird mittels der Regelung des elektrischen Antriebs für den Draht der Antriebsstrom des elektrischen Antriebs direkt geregelt, wodurch entsprechend die Fördergeschwindigkeit des geförderten Drahts geregelt wird.

Dazu ist in einer Ausgestaltung des Verfahren weiter vorgesehen, dass die Drahtfördervorrichtung einen bestrombaren oder bestromten elektrischen Antrieb aufweist, wobei insbesondere mittels des Antriebskenngrößensensors die aufgenommene Stromstärke des elektrischen Antriebs und/oder das Drehmoment des elektrischen Antriebs im Antriebsstrang für den Draht als Antriebskenngrößen erfasst werden.

Für den Betrieb des elektrischen Antriebs wird dieser mit Strom mit einer Stromstärke beaufschlagt, wobei für die Regelung der Förderrichtung die Stromstärke geregelt wird, wodurch entsprechend die Fördergeschwindigkeit des Drahts beeinflusst wird. Hierzu ist ein entsprechender Sensor als Antriebskenngrößensensor vorgesehen, um die aufgenommene Stromstärke des elektrischen Antriebs zu erfassen. Außerdem ist in einer weiteren Ausgestaltung ein Sensor als Antriebskenngrößensensor vorgesehen, um das Drehmoment des elektrischen Antriebs im Antriebsstrang zu erfassen. Vorzugsweise korrelieren diese beiden Antriebskenngrößen mit der Fördergeschwindigkeit des Drahts sowie mit der durch die Drahtspitze auf die Substratoberfläche aufgebrachten Kraft.

Darüber hinaus zeichnet sich die Ausgestaltung des Verfahrens dadurch aus, dass die Drahtfördervorrichtung eine Drahtführungsvorrichtung für den Draht aufweist, wobei insbesondere mittels des Bewegungskenngrößensensors eine Auslenkung der Drahtführungsvorrichtung und/oder eine durch die Anpresskraft der Drahtspitze auf die Substratoberfläche bewirkte Kraft auf die Drahtführungsvorrichtung als Bewegungskenngröße erfasst werden.

Hierbei ist die Drahtführungsvorrichtung mit einem Bewegungskenngrößensensor ausgebildet, wobei beispielsweise eine laterale Auslenkung der Drahtführungsvorrichtung quer zur Förderrichtung des Drahts erfasst wird. In einer anderen Ausgestaltung ist vorgesehen, dass eine auf die Drahtführungsvorrichtung wirkende Kraft durch den durch die Drahtführungsvorrichtung hindurchgeführten Draht erfasst wird, wobei die auf die Drahtführungsvorrichtung wirkende Kraft aufgrund der Anpresskraft oder Anpressdruck der Drahtspitze auf die Substratoberfläche erfasst wird.

Des Weiteren ist in einer vorteilhaften Ausgestaltung des Verfahrens vorgesehen, dass die Drahtfördervorrichtung ein, insbesondere bewegbares, Drahtfördergestell, insbesondere mit einem elektrischen Antrieb, aufweist, wobei insbesondere mittels des Bewegungskenngrößensensors eine Auslenkung des Drahtfördergestells und/oder eine durch die Anpresskraft der Drahtspitze auf die Substratoberfläche bewirkte Kraft auf das Drahtfördergestell als Bewegungskenngrößen erfasst werden. Hierzu der Bewegungskenngrößensensor an dem Drahtfördergestell angeordnet.

Vorzugsweise wird als Strahlungsquelle eine einen Laserstrahl erzeugende Laserauftragschweißvorrichtung oder eine einen Elektronenstrahl erzeugende Elektronenstrahlschweißvorrichtung betrieben.

Darüber hinaus ist in einer Ausgestaltung vorgesehen, dass die Strahlungsquelle ein Strahlfokussierelement zum Fokussieren eines Strahls, insbesondere eines Laserstrahls oder Elektronenstrahls, im Bereich der Substratoberfläche und der Drahtspitze aufweist.

Darüber hinaus ist es bei dem Verfahren bevorzugt, dass die Drahtfördervorrichtung und die Strahlungsquelle relativ in Bezug auf das Substrat, vorzugsweise gemeinsam, bewegt werden, oder dass die die Drahtfördervorrichtung relativ in Bezug auf das Substrat bewegt wird und, vorzugweise gleichzeitig ein auf die Drahtspitze gerichteter Strahl der Strahlungsquelle geführt wird. Hierdurch wird ein schichtweiser Aufbau einer Struktur auf dem Substrat durch eine Bewegung der Drahtfördervorrichtung und der Strahlungsquelle sowie durch die Nachführung oder Ablenkung des auf die Drahtspitze gerichteten Strahls in Bezug auf das Substrat ermöglicht.

Ferner wird die Aufgabe gelöst durch eine drahtbasierte Materialauftragungsvorrichtung, insbesondere eine Strahlungsschweißvorrichtung, mit einer Drahtfördervorrichtung zum Fördern eines eine Drahtspitze aufweisenden Drahts, insbesondere Schweißdraht, in Richtung einer Substratoberfläche eines Substrats, insbesondere Bauteil, mit einer Fördergeschwindigkeit, wobei die Drahtspitze mit einer Anpresskraft auf die Substratoberfläche gedrückt wird oder ist, mit einer Strahlungsquelle zum Schmelzen des Materials der an der Substratoberfläche angeordneten Drahtspitze des Drahts, insbesondere zum Aufschweißen des Materials des Drahts,
wobei ein Antriebskenngrößensensor zum Erfassen wenigstens einer Antriebskenngröße der Drahtfördervorrichtung und eine mit dem Antriebskenngrößensensor verbundene Regelvorrichtung vorgesehen sind, wobei die Regelvorrichtung eingerichtet ist, die Fördergeschwindigkeit des Drahts in Abhängigkeit der wenigstens einen Antriebskenngröße der Drahtfördervorrichtung zu regeln, so dass insbesondere die Anpresskraft, mit der die Drahtspitze des Drahts auf die Substratoberfläche gedrückt wird, konstant gehalten wird oder ist,
und/oder wobei ein Bewegungskenngrößensensor zum Erfassen wenigstens einer durch den geförderten Draht bewirkte Bewegungskenngröße der Drahtfördervorrichtung und eine mit dem Bewegungskenngrößensensor verbundene Regelvorrichtung vorgesehen sind, wobei die Regelvorrichtung eingerichtet ist, die Fördergeschwindigkeit des Drahts in Abhängigkeit der wenigstens einen Bewegungskenngröße der Drahtfördervorrichtung zu regeln, so dass insbesondere die Anpresskraft, mit der die Drahtspitze des Drahts auf die Substratoberfläche gedrückt wird, konstant gehalten wird oder ist.

Gemäß der Erfindung ist dabei vorgesehen, dass die drahtbasierte Materialauftragungsvorrichtung eingerichtet ist, das voranstehend beschriebene Verfahren auszuführen.

Eine Ausgestaltung der Drahtfördervorrichtung zeichnet sich dadurch aus, dass die Drahtfördervorrichtung einen bestrombaren oder bestromten elektrischen Antrieb aufweist, wobei insbesondere der Antriebskenngrößensensor eingerichtet ist, die aufgenommene Stromstärke des elektrischen Antriebs und/oder das Drehmoment des elektrischen Antriebs im Antriebsstrang für den Draht als Antriebskenngrößen zu erfassen.

Gemäß einer Weiterbildung ist bei der Materialauftragungsvorrichtung vorgesehen, dass die Drahtfördervorrichtung eine Drahtführungsvorrichtung für den Draht, insbesondere Schweißdraht, aufweist, wobei insbesondere der Bewegungskenngrößensensor eingerichtet ist, eine Auslenkung der Drahtführungsvorrichtung und/oder eine durch die Anpresskraft der Drahtspitze auf die Substratoberfläche bewirkte Kraft auf die Drahtführungsvorrichtung als Bewegungskenngrößen zu erfassen.

Ferner ist gemäß bei einem weiteren Aspekt der drahtbasierten Materialauftragungsvorrichtung vorgesehen, dass die Drahtfördervorrichtung ein, insbesondere bewegbares, Drahtfördergestell, insbesondere mit einem elektrischen Antrieb, aufweist, wobei insbesondere der Bewegungskenngrößensensor eingerichtet ist, eine Auslenkung des Drahtfördergestells und/oder eine durch die Anpresskraft der Drahtspitze auf die Substratoberfläche bewirkte Kraft auf das Drahtfördergestell als Bewegungskenngrößen zu erfassen.

Vorzugsweise ist die Strahlungsquelle als eine einen Laserstrahl erzeugende Laserauftragschweißvorrichtung oder als eine einen Elektronenstrahl erzeugende Elektronenstrahlschweißvorrichtung ausgebildet.

Bevorzugterweise weist gemäß einem weiteren Aspekt die Strahlungsquelle ein Strahlfokussierelement zum Fokussieren eines Strahls, insbesondere eines Laserstrahls oder eines Elektronenstrahls, im Bereich der Substratoberfläche und der Drahtspitze auf.

In einer weiteren Ausgestaltung sind die Drahtfördervorrichtung und die Strahlungsquelle relativ in Bezug auf das Substrat, vorzugsweise gemeinsam, bewegbar oder dass die Drahtfördervorrichtung relativ in Bezug auf das Substrat bewegbar ist und, vorzugweise gleichzeitig ein auf die Drahtspitze gerichteter Strahl der Strahlungsquelle führbar ist. Hierzu sind entsprechende Antriebe vorgesehen, um eine relative Bewegung zwischen dem Substrat und der Drahtfördervorrichtung sowie der Strahlungsquelle zu bewirken. Für die (Nach-)Führung eines Strahls, z.B. eines Elektronenstrahls, ist beispielweise ein Deflektor oder dergleichen vorgesehen.

In einer weiteren Ausgestaltung ist bevorzugterweise vorgesehen, dass die Materialauftragungsvorrichtung mit einem koaxialen Drahtführungsmittel oder mit einem lateralen Drahtführungsmittel ausgebildet ist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch einen Aufbau einer Laserauftragschweißvorrichtung in einer Ausgestaltung und
- Fig. 2: schematisch einen Aufbau einer Elektronenstrahlschweißvorrichtung gemäß einer Ausführungsform.

In den Zeichnungen sind jeweils gleiche oder gleichartige Elemente und/oder Teile mit denselben Bezugsziffern versehen, so dass von einer erneuten Vorstellung jeweils abgesehen wird.

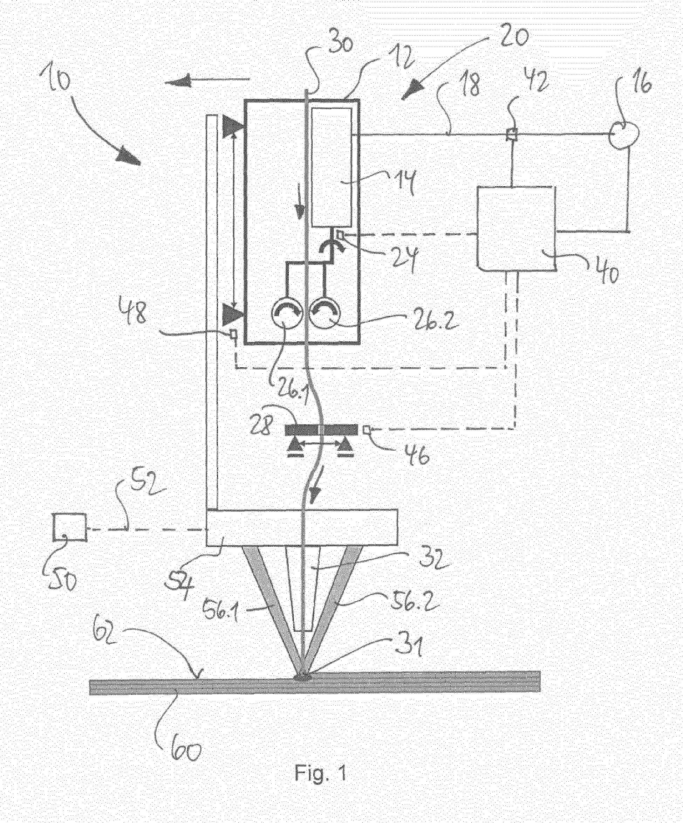

In Fig. 1 ist schematisch ein Aufbau einer Laserauftragschweißvorrichtung 10 gezeigt. Die Laserauftragschweißvorrichtung 10 weist eine Drahtfördervorrichtung 20 für einen Schweißdraht 30 auf. Die in Fig. 1 dargestellte Ausführungsform der Laserauftragschweißvorrichtung 10 weist hierbei eine koaxiale Drahtführung für den Schweißdraht 30 auf.

Die Drahtfördervorrichtung 20 verfügt über ein Gestell 12, in dem ein elektrischer Antrieb 14 angeordnet ist. Der elektrische Antrieb 14 ist über eine Stromleitung 18 mit einer Stromquelle 16 verbunden. Der Antrieb 14 ist beispielsweise als Drehantrieb ausgebildet und weist eine Drehachse 24 auf, die in Wirkverbindung mit zwei von der Drehachse 24 angetriebenen Rollen 26.1, 26.2 steht. In einer anderen Ausgestaltung sind vier (oder mehr) Rollen für die Förderung des Schweißdrahts 30 vorgesehen.

Zwischen den Rollen 26.1, 26.2 wird der Schweißdraht 30 geführt, wobei der Schweißdraht 30 im Eingriff mit den durch den Antrieb 14 angetriebenen Rollen 26.1, 26.2 gefördert wird. Ausgangsseitig des Gestells 12 ist eine Drahtführung 28 für den Schweißdraht 30 angeordnet, durch die der Schweißdraht 30 hindurchgeführt wird. Anschließend wird der Schweißdraht 30 in Richtung eines Substrats 60 weitergefördert. Hierbei wird der Schweißdraht 30 nach der Drahtführung 28 über eine Drahtdüse 32 in Richtung einer Substratoberfläche 62 des Substrats 60 geführt.

Der Schweißdraht 30 weist endseitig im Bereich der Substratoberfläche 62 eine Drahtspitze 31 auf. Aufgrund der Förderung des Schweißdrahts 30 mittels der angetriebenen Rollen 26.1, 26.2 wird die Drahtspitze 31 auf die Substratoberfläche 62 des als Bauteils ausgebildeten Substrats 60 gedrückt. Hierbei übt die Drahtspitze 31 eine Kraft auf die Substratoberfläche 62 aus.

Um die Drahtspitze 31 des Drahts 30 zu schmelzen, ist bei der Laserauftragschweißvorrichtung 10 ein Laser 50 vorgesehen, der einen Laserstrahl 52 erzeugt. Der Laserstrahl 52 wird hierbei von einem Strahlfokussierelement 54 geführt und in Richtung des Substrats 60 fokussiert, wobei der Laserstrahl 52 mittels des Strahlfokussierelement s 54 in zwei Teilstrahlen 56.1, 56.2 aufgeteilt wird und die Teilstrahlen 56.1, 56.2 in Richtung der Drahtspitze 31 bzw. der Substratoberfläche 62 des Substrats 60 gerichtet sind.

In einer anderen Ausführungsform sind drei oder mehr fokussierte Teilstrahlen auf die Drahtspritze 31 gerichtet.

Aufgrund der hohen Energiedichte der Teilstrahlen 56.1, 56.2 wird die Drahtspitze 31 des Schweißdrahts 30 im Bereich der Substratoberfläche 62 aufgeschmolzen, wobei nach einer Abkühlung die Schmelze mit der Substratoberfläche 62 verbunden ist.

Die Laserauftragschweißvorrichtung 10 weist außerdem eine Regelvorrichtung 40 auf, um die Stromstärke der Stromquelle 16 zu regeln. Hierzu ist die Regelvorrichtung 40 mit einem Strommesssensor 42 verbunden, der die für den Antrieb 14 bereitgestellte Stromstärke innerhalb der Stromleitung18 erfasst. Die Stromstärke korreliert mit der Anpresskraft der Drahtspitze 31 auf die Substratoberfläche 62. Bei Abweichung der gemessenen Ist-Stromstärke von einer Soll-Stromstärke wird die für den Antrieb 14 bereitgestellte Stromstärke erhöht oder verringert, wodurch die Anpresskraft der Drahtspitze 31 auf die Substratoberfläche 62 im Wesentlichen konstant ist oder konstant gehalten wird.

In einer anderen Ausführung passt der Antrieb 14 bei einer verringerten Geschwindigkeit über eine Regelvorrichtung die Stromstärke an, um die Soll-Geschwindigkeit zu erreichen.

Durch den erfindungsgemäßen Regelkreis wird erreicht, dass die Schmelze an der Drahtspitze 31 weder überhitzt noch unterkühlt wird, wodurch die Materialauftragsrate auf die Substratoberfläche 62 angepasst ist. Außerdem wird dadurch der Energieeintrag in das Substrat minimiert.

In einer alternativen Ausgestaltung ist anstelle des Strommesssensors 42 die Regelvorrichtung 40 mit einem Drehmomentsensor 44 verbunden, um das Drehmoment der Drehachse 24 des Antriebs 14 zu erfassen. Durch einen Ist-Sollwertvergleich des gemessenen Ist-Drehmoments mit einem Soll-Drehmoment mittels der Regelvorrichtung 40 wird ermittelt, ob die Anpresskraft der Drahtspitze 31 auf die Substratoberfläche 62 konstant ist. Bei einer Abweichung wird durch eine Erhöhung oder Verringerung des bereitgestellten Stroms das Drehmoment der Drehachse 42 entsprechend erhöht oder verringert.

Das gemessene Drehmoment sowie die gemessene Stromstärke sind hierbei als Antriebskenngrößen der Drahtfördervorrichtung 20 ausgebildet.

In einer in Fig. 1 weiter dargestellten Alternative ist die Regelvorrichtung 40 mit einem Kraftmesssensor 46 für die Drahtführung 28 verbunden, mittels dem die durch den Schweißdraht 30 auf die Drahtführung 28 ausgeübte Kraft erfasst wird. Anhand dieser Bewegungskenngrößen der Drahtfördervorrichtung ist es ebenfalls möglich, die Anpresskraft des Drahts auf die Substratoberfläche konstant zu halten.

In einer weiteren Ausgestaltung ist es möglich, dass mittels eines entsprechenden Sensors auch die Auslenkung der Drahtführung 28 in lateraler Richtung, d.h. quer zur Förderrichtung des Schweißdrahts 30 mittels eines Sensors als Bewegungskenngröße der Drahtfördervorrichtung 20 erfasst wird.

Darüber hinaus ist in einer weiteren Ausführungsform ein Auslenkungssensor 48 zur Erfassung der Auslenkung des Gestells 14 aufgrund der durch den Anpressdruck der Drahtspitze 31 auf das Gestell 12 wirkenden Kraft. Der Auslenkungssensor 48 ist mit der Regelvorrichtung 40 verbunden, um anhand der gemessenen Auslenkung des Gestells 14 die Stromstärke für den Antrieb 14 entsprechend einzustellen, um die Anpresskraft der Drahtspitze 31 auf das Substrat 60 bzw. die Substratoberfläche 62 konstant zu halten.

Die Drahtfördervorrichtung 20 wird gegenüber dem Substrat 60 bewegt, um schichtweise eine Struktur auf der Substratoberfläche 62 des Substrats auszubilden, um dadurch beispielsweise ein Bauteil oder dergleichen herzustellen. Die gemessene Auslenkung des Gestells 12 ist hierbei als Bewegungskenngröße der Drahtfördervorrichtung ausgebildet.

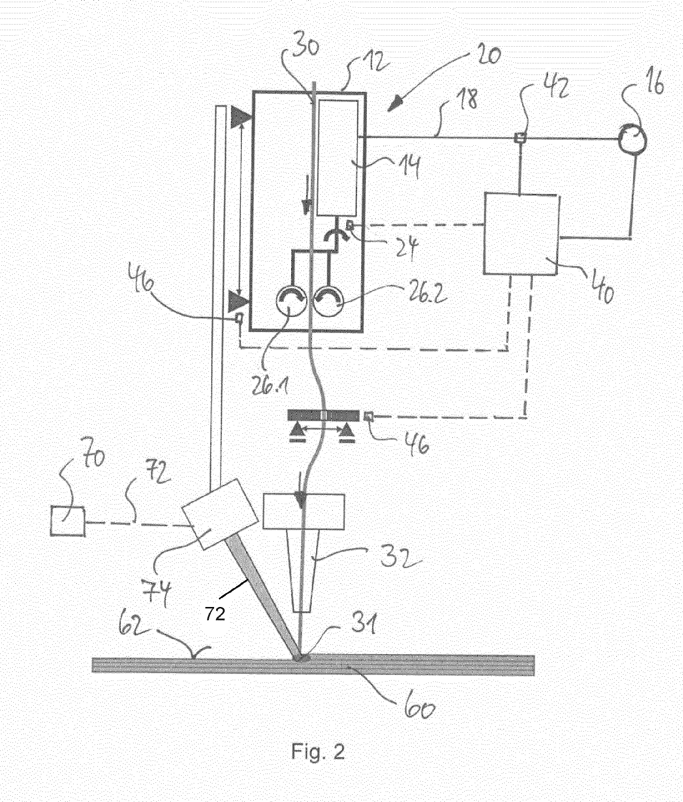

In Fig. 2 ist ein anderes Ausführungsbeispiel für eine Elektronenstrahlschweißvorrichtung 100 dargestellt. Bei der in Fig. 2 dargestellten Ausgestaltung der Elektronenstrahlschweißvorrichtung 100 ist eine laterale Drahtführung für den Schweißdraht 30 ausgebildet.

Gegenüber dem Ausführungsbeispiel in Fig. 1 wird anstelle eines Laserstrahls aus einer Elektronenstrahlquelle 70 ein Elektronenstrahl 72 erzeugt, der mittels einer Deflektorvorrichtung 74 in Richtung der Substratoberfläche 62 des Substrats 60 gelenkt und geführt wird, um die Drahtspitze 31 aufzuschmelzen. Die Elektronenstrahlquelle 70 weist für die Erzeugung eines Elektronenstrahls eine Kathode, eine Steuerelektrode und Anode auf.

Gemäß den verschiedenen Ausführungsformen der Regelvorrichtung 40 wird die Anpresskraft der Drahtspitze 31 auf das Substrat 60 bzw. die Substratoberfläche 62 im Wesentlichen konstant gehalten. Die in Fig. 1 beschriebenen Regelfunktionen für die Laserauftragschweißvorrichtung 10 (vgl. Fig. 1) gelten auch in entsprechender Weise für die Elektronenstrahlschweißvorrichtung 100. Bei beiden Ausführungsformen wird die Anpresskraft der Drahtspitze 31 auf die Substratoberfläche 62 aufgrund der Regelungen der Stromstärke für den Antrieb 14 konstant gehalten.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Laserauftragschweißvorrichtung
- 12: Gestell
- 14: Antrieb
- 16: Stromquelle
- 18: Stromleitung
- 20: Drahtfördervorrichtung
- 24: Drehachse
- 26.1, 26.2: Rolle
- 28: Drahtführung
- 30: Schweißdraht
- 31: Drahtspitze
- 32: Drahtdüse
- 40: Regelvorrichtung
- 42: Strommesssensor
- 44: Drehmomentsensor
- 46: Kraftmesssensor
- 48: Auslenkungssensor
- 50: Laser
- 52: Laserstrahl
- 54: Strahlfokussierelement
- 56.1, 56.2: Teilstrahl
- 60: Substrat
- 62: Substratoberfläche
- 70: Elektronenstrahlquelle
- 72: Elektronenstrahl
- 74: Deflektorvorrichtung
- 100: Elektronenstrahlschweißvorrichtung

## Patentansprüche

1. Verfahren zum Betreiben einer drahtbasierten Materialauftragungsvorrichtung (10, 100), insbesondere einer Strahlungsschweißvorrichtung, wobei ein eine Drahtspitze (31) aufweisender Draht (30), insbesondere Schweißdraht (30), mittels einer Drahtfördervorrichtung (20) in Richtung einer Substratoberfläche (62) eines Substrats (60), insbesondere Bauteils, mit einer Fördergeschwindigkeit gefördert wird und die Drahtspitze (31) mit einer Anpresskraft auf die Substratoberfläche (62) gedrückt wird, wobei die an der Substratoberfläche (62) angeordnete Drahtspitze (31) mittels einer Strahlungsquelle (50, 70) geschmolzen wird, so dass das aufgeschmolzene Material der Drahtspitze (31) auf die Substratoberfläche (62) aufgebracht, insbesondere aufgeschweißt, wird,
wobei mittels eines Antriebskenngrößensensors (42, 44) wenigstens eine Antriebskenngröße der Drahtfördervorrichtung (20) erfasst wird, wobei die wenigstens eine erfasste Antriebskenngröße der Drahtfördervorrichtung (20) an eine Regelvorrichtung (40) übermittelt wird und wobei mittels der Regelvorrichtung (40) die Fördergeschwindigkeit des Drahts (30) in Abhängigkeit der wenigstens einen Antriebskenngröße der Drahtfördervorrichtung (20) geregelt wird, so dass insbesondere die Anpresskraft, mit der die Drahtspitze (31) des Drahts (30) auf die Substratoberfläche (62) gedrückt wird, konstant gehalten wird oder ist,
und/oder wobei mittels eines Bewegungskenngrößensensors (46, 48) wenigstens eine durch den geförderten Draht (30) bewirkte Bewegungskenngröße der Drahtfördervorrichtung (20) erfasst wird, wobei die wenigstens eine erfasste Bewegungskenngröße der Drahtfördervorrichtung (20) an eine oder die Regelvorrichtung (40) übermittelt wird und wobei mittels der Regelvorrichtung (40) die Fördergeschwindigkeit des Drahts (30) in Abhängigkeit der wenigstens einen Bewegungskenngröße der Drahtfördervorrichtung (20) geregelt wird, so dass insbesondere die Anpresskraft, mit der die Drahtspitze (31) des Drahts (30) auf die Substratoberfläche (62) gedrückt wird, konstant gehalten wird oder ist.

2. Verfahren nach Anspruch 1, **dadurch gekennzeichnet, dass** die Drahtfördervorrichtung (20) einen bestrombaren oder bestromten elektrischen Antrieb (14) aufweist, wobei insbesondere mittels des Antriebskenngrößensensors (42, 44) die aufgenommene Stromstärke des elektrischen Antriebs (14) und/oder das Drehmoment des elektrischen Antriebs im Antriebsstrang für den Draht (30) als Antriebskenngrößen erfasst werden.

3. Verfahren nach Anspruch 1 oder 2, **dadurch gekennzeichnet, dass** die Drahtfördervorrichtung (20) eine Drahtführungsvorrichtung (28) für den Draht (30) aufweist, wobei insbesondere mittels des Bewegungskenngrößensensors (46, 48) eine Auslenkung der Drahtführungsvorrichtung (28) und/oder eine durch die Anpresskraft der Drahtspitze (31) auf die Substratoberfläche (62) bewirkte Kraft auf die Drahtführungsvorrichtung (28) als Bewegungskenngröße erfasst werden.

4. Verfahren nach einem der Ansprüche 1 bis 3, **dadurch gekennzeichnet, dass** die Drahtfördervorrichtung (20) ein, insbesondere bewegbares, Drahtfördergestell (12), insbesondere mit einem elektrischen Antrieb, aufweist, wobei insbesondere mittels des Bewegungskenngrößensensors (46, 48) eine Auslenkung des Drahtfördergestells (12) und/oder eine durch die Anpresskraft der Drahtspitze (31) auf die Substratoberfläche (62) bewirkte Kraft auf das Drahtfördergestell (12) als Bewegungskenngrößen erfasst werden.

5. Verfahren nach einem der Ansprüche 1 bis 4, **dadurch gekennzeichnet, dass** als Strahlungsquelle (50, 70) eine einen Laserstrahl erzeugende Laserauftragschweißvorrichtung (10) oder eine einen Elektronenstrahl erzeugende Elektronenstrahlschweißvorrichtung (70) betrieben wird.

6. Verfahren nach einem der Ansprüche 1 bis 5, **dadurch gekennzeichnet, dass** die Strahlungsquelle (50, 70) ein Strahlfokussierelement (54) zum Fokussieren eines Strahls, insbesondere eines Laserstrahls (52) oder Elektronenstrahls (72), im Bereich der Substratoberfläche (62) und der Drahtspitze (31) aufweist.

7. Verfahren nach einem der Ansprüche 1 bis 8, **dadurch gekennzeichnet, dass** die Drahtfördervorrichtung (20) und die Strahlungsquelle (50, 70) relativ in Bezug auf das Substrat (60), vorzugsweise gemeinsam, bewegt werden oder dass die die Drahtfördervorrichtung (20) relativ in Bezug auf das Substrat (60) bewegt wird und, vorzugweise gleichzeitig ein auf die Drahtspitze (31) gerichteter Strahl der Strahlungsquelle (50, 70) geführt wird.

8. Drahtbasierte Materialauftragungsvorrichtung (10, 100), insbesondere eine Strahlungsschweißvorrichtung (10, 100), mit einer Drahtfördervorrichtung (20) zum Fördern eines eine Drahtspitze (31) aufweisenden Drahts (30), insbesondere Schweißdraht (30), in Richtung einer Substratoberfläche (62) eines Substrats (60), insbesondere Bauteil, mit einer Fördergeschwindigkeit, wobei die Drahtspitze (31) mit einer Anpresskraft auf die Substratoberfläche (62) gedrückt wird oder ist, mit einer Strahlungsquelle (50, 70) zum Schmelzen des Materials der an der Substratoberfläche (62) angeordneten Drahtspitze (31) des Drahts (30), insbesondere zum Aufschweißen des Materials des Drahts (30),
wobei ein Antriebskenngrößensensor (42, 44) zum Erfassen wenigstens einer Antriebskenngröße der Drahtfördervorrichtung (20) und eine mit dem Antriebskenngrößensensor (42, 44) verbundene Regelvorrichtung (40) vorgesehen sind, wobei die Regelvorrichtung (40) eingerichtet ist, die Fördergeschwindigkeit des Drahts (30) in Abhängigkeit der wenigstens einen Antriebskenngröße der Drahtfördervorrichtung (20) zu regeln, so dass insbesondere die Anpresskraft, mit der die Drahtspitze (31) des Drahts (30) auf die Substratoberfläche (62) gedrückt wird, konstant gehalten wird oder ist,
und/oder wobei ein Bewegungskenngrößensensor (46, 48) zum Erfassen wenigstens einer durch den geförderten Draht (30) bewirkte Bewegungskenngröße der Drahtfördervorrichtung (20) und eine mit dem Bewegungskenngrößensensor (46, 48) verbundene Regelvorrichtung (40) vorgesehen sind, wobei die Regelvorrichtung (40) eingerichtet ist, die Fördergeschwindigkeit des Drahts (30) in Abhängigkeit der wenigstens einen Bewegungskenngröße der Drahtfördervorrichtung (20) zu regeln, so dass insbesondere die Anpresskraft, mit der die Drahtspitze (31) des Drahts (30) auf die Substratoberfläche (62) gedrückt wird, konstant gehalten wird oder ist.

9. Drahtbasierte Drahtfördervorrichtung (20) nach Anspruch 8, **dadurch gekennzeichnet, dass** die Drahtfördervorrichtung (20) einen bestrombaren oder bestromten elektrischen Antrieb (14) aufweist, wobei insbesondere der Antriebskenngrößensensor (42, 44) eingerichtet ist, die aufgenommene Stromstärke des elektrischen Antriebs (14) und/oder das Drehmoment des elektrischen Antriebs (14) im Antriebsstrang für den Draht (30) als Antriebskenngrößen zu erfassen.

10. Drahtbasierte Materialauftragungsvorrichtung (10, 100) nach Anspruch 8 oder 9, **dadurch gekennzeichnet, dass** die Drahtfördervorrichtung (20) eine Drahtführungsvorrichtung (28) für den Draht (30), insbesondere Schweißdraht, aufweist, wobei insbesondere der Bewegungskenngrößensensor (46, 48) eingerichtet ist, eine Auslenkung der Drahtführungsvorrichtung (28) und/oder eine durch die Anpresskraft der Drahtspitze (31) auf die Substratoberfläche (62) bewirkte Kraft auf die Drahtführungsvorrichtung (28) als Bewegungskenngrößen zu erfassen.

11. Drahtbasierte Materialauftragungsvorrichtung (10, 100) nach einem der Ansprüche 8 bis 10, **dadurch gekennzeichnet, dass** die Drahtfördervorrichtung (20) ein, insbesondere bewegbares, Drahtfördergestell (12), insbesondere mit einem elektrischen Antrieb, aufweist, wobei insbesondere der Bewegungskenngrößensensor (46, 48) eingerichtet ist, eine Auslenkung des Drahtfördergestells (12) und/oder eine durch die Anpresskraft der Drahtspitze (31) auf die Substratoberfläche (62) bewirkte Kraft auf das Drahtfördergestell (12) als Bewegungskenngrößen zu erfassen.

12. Drahtbasierte Materialauftragungsvorrichtung (10, 100) nach einem der Ansprüche 8 bis 11, **dadurch gekennzeichnet, dass** die Strahlungsquelle (50, 70) als eine einen Laserstrahl erzeugende Laserauftragschweißvorrichtung oder als eine einen Elektronenstrahl erzeugende Elektronenstrahlschweißvorrichtung ausgebildet ist.

13. Drahtbasierte Materialauftragungsvorrichtung (10, 100) nach einem der Ansprüche 8 bis 12, **dadurch gekennzeichnet, dass** die Strahlungsquelle (50, 70) ein Strahlfokussierelement (54) zum Fokussieren eines Strahls, insbesondere eines Laserstrahls oder eines Elektronenstrahls, im Bereich der Substratoberfläche (62) und der Drahtspitze (31) aufweist.

14. Drahtbasierte Materialauftragungsvorrichtung (10, 100) nach einem der Ansprüche 8 bis 13, **dadurch gekennzeichnet, dass** die Drahtfördervorrichtung (20) und die Strahlungsquelle (50, 70) relativ in Bezug auf das Substrat (60), vorzugsweise gemeinsam, bewegbar ist oder dass die Drahtfördervorrichtung (20) relativ in Bezug auf das Substrat (60) bewegbar ist und, vorzugweise gleichzeitig ein auf die Drahtspitze (31) gerichteter Strahl der Strahlungsquelle (50, 70) führbar ist.

15. Drahtbasierte Materialauftragungsvorrichtung (10, 100) nach einem der Ansprüche 8 bis 15, **dadurch gekennzeichnet, dass** die Materialauftragungsvorrichtung (10, 100) mit einem koaxialen Drahtführungsmittel oder mit einem lateralen Drahtführungsmittel ausgebildet ist.
